# EUROPÄISCHE PATENTSCHRIFT

(11) **EP 0 372 060 B1**
(45) Veröffentlichungstag und Bekanntmachung des Hinweises auf die Patenterteilung: **10.02.1993**
(21) Anmeldenummer: 89906712.8
(22) Anmeldetag: 15.06.1989
(51) Int. Cl.: G01H 3/12, G01H 13/00, G01N 29/04

(54) **AKUSTISCHES RASTERMIKROSKOP ZUR UNTERSUCHUNG EINES OBJEKTES IM NAHFELD EINES RESONANTEN AKUSTISCHEN OSZILLATORS**
AN ACOUSTIC SCREEN SCAN MICROSCOPE FOR THE EXAMINATION OF AN OBJECT IN THE SHORT-RANGE FIELD OF A RESONANT ACOUSTIC OSCILLATOR
MICROSCOPE A BALAYAGE ACOUSTIQUE POUR L'EXAMEN D'UN OBJET DANS LE CHAMP PROCHE D'UN OSCILLATEUR ACOUSTIQUE RESONANT

(30) Priorität: 16.06.1988 DE 3820518
(43) Veröffentlichungstag der Anmeldung: 13.06.1990
(73) Patentinhaber: Hommelwerke GmbH, D-78056 Villingen-Schwenningen (DE)
(72) Erfinder: DRANSFELD, Klaus, Prof. Dr., CH-8272 Ermatingen (CH); FISCHER, Ulrich, Dr., D-6330 Wetzlar (DE); GÜTHNER, Peter, D-7750 Konstanz (DE); HEITMANN, Knut, D-6330 Wetzlar (DE)
(74) Vertreter: Leine, Sigurd, Dipl.-Ing.
(86) Internationale Anmeldenummer: DE8900391
(87) Internationale Veröffentlichungsnummer: WO8912805

(56) Entgegenhaltungen:
- EP-A- 0 198 944
- DE-A- 3 723 933
- GB-A- 2 114 745
- US-A- 3 472 063
- IBM Technical Disclosure Bulletin, vol. 25, Nr. 10, March 1983, (New York, US), T.H. DiStefano et al: "Acoustic Contour Mapping", pages 5103-5108
- IEEE Transactions on Sonics and Ultrasonics, Vol. SU-31, Nr. 2, part 1, March 1984 IEEE (New York), H.L. BERTONI : "Ray-optical evaluation of V(z) in the reflection acoustic microscope", pages 105-116

## Beschreibung

Die Erfindung betrifft ein akustisches Rastermikroskop, welches Wechselwirkungseffekte im akustischen Nahfeld eines Objektes ausnutzt. Mit dem Ausdruck "Nahfeld" wird dabei beschrieben, daß die Größe der Strahlungsquelle und deren Abstand zum Objekt etwa gleich groß und erheblich kleiner als die Wellenlänge der benutzten Strahlung sind. In einer Nahfeld-Anordnung ist das entscheidende Merkmal, daß die Auflösung nicht mehr durch die Wellenlänge der benutzten Strahlung klassisch begrenzt ist, sondern viel kleiner sein kann und durch Größe und Abstand der Strahlungsquelle bestimmt wird. Dies ist z.B. durch ein optisches Nahfeld-Rastermikroskop gemäß EP-B-0 112 401 bekannt.

Ein akustisches Rastermikroskop, welches die klassische Auflösungsgrenze unterschreitet und eine Auflösung von etwa ein Zehntel der Schallwellenlänge erreicht, ist aus J.K. Zieniuk, A. Latuszek, IEEE Ultrasonics Symposium 1986, S. 1037-1039 bekannt.

Ultraschallwellen von ca. 3MHz werden durch das Objekt transmittiert, über ein flüssiges Kopplungsmedium in einen in geringem Abstand über dem Objekt gehaltenenen Schallwellenleiter eingekoppelt und von diesem einem Übertrager als Detektor zugeleitet. Kennzeichnend ist die Kegelstumpfform des Schallwellenleiters, dessen kleine Deckfläche von ca. 20 µm Durchmesser deutlich kleiner als die verwendete Schallwellenlänge (ca. 0,5 mm) ist und dem Objekt zugewandt ist. Die Größe der kleinen Deckfläche bestimmt die erreichbare Auflösung.

Auch aus US-A-4 646 573 ist ein solches Mikroskop bekannt.

Eine Transmissionsanordnung dieser Art ist grundsätzlich nur für eine enge Auswahl von Objekten geeignet.

Eine Reflexanordnung mit einem derartigen Kegelstumpf anstelle einer Akustolinse ist grundsätzlich möglich. Dann treten aber hohe Leistungsverluste, die Notwendigkeit des Impulsbetriebs und beträchtliche Störungen durch verschiedene Reflexe auf, was alles in schwächerer Form schon beim klassischen Akustomikroskop Probleme aufwirft (A. Thaer, M. Hoppe, W. J. Patzelt, Leitz Mitt. Wiss. Techn. VIII (1982), 61-67).

Aus EP-A-0 223 918 ist ein Kraftmikroskop bekannt. Dieses gewinnt ein topographisches Bild eines Objekts, indem eine Spitze so weit an das Objekt herangeführt wird, bis die Elektronenwolken der Atome in der Spitze und im Objekt sich überlappen und so interatomare Kräfte auftreten. Der Abstand liegt dann unter 1nm. Die Spitze ist an einer Balkenfeder angebracht und die Kräfte werden nachgewiesen durch den Einfluß der Federauslenkung auf ein die Feder beobachtendes Raster-Tunnel-Mikroskop. Es wird vorgeschlagen, dabei die Balkenfeder mit ihrer Eigenfrequenz von 2KHz und mit einer Amplitude kleiner als 1nm in z-Richtung schwingen zu lassen. Dadurch wird ein Trägerfrequenzverfahren eingeführt, das Fehlereinflüsse reduziert. Bei diesem Kraftmikroskop ist es als besonders vorteilhaft angegeben, wenn Objekt und Nachweissystem im Ultrahochvakuum (also bei etwa 10⁻⁸Pa) untergebracht sind.

Aus der nicht vorveröffentlichten DE-A-37 23 933 ist ein Berührungsdetektor für Berührungsflächen im Bereich um ein Quadratmikrometer und Berührungskräfte im Bereich von weniger als ein Millinewton bekannt, bei dem ein stabförmiger Resonator mit spitzer Sonde zu mechanischen Eigenschwingungen in Längsrichtung angeregt wird und ein Berührungssignal erscheint, wenn die Amplitude bei Annäherung der Sonde an die Meßfläche um z. B. ein Dezibel abfällt. Auch Frequenzänderungen können erfaßt werden. Es kann eine Fläche abgetastet werden und dabei die Amplitude konstant geregelt werden. Es sind getrennte Elektrodenpaare für Anregung und Nachweis der Schwingungen des Resonators vorgesehen. Die Verstimmung wird durch direkten mechanischen Kontakt ohne Koppelmedium, so wie er bei Härteprüfungen vorkommt, erreicht. Eigenschaften des akustischen Feldes, insbesondere des Nahfeldes, werden nicht einbezogen.

Es ist Aufgabe der vorliegenden Erfindung, ein akustisches Rastermikroskop anzugeben, dessen Auflösung absolut und relativ zur Schallwellenlänge gegenüber dem Stand der Technik deutlich gesteigert ist und im Submikronbereich liegt. Es soll unabhängig von den Transmissions- und Reflexionseigenschaften des Objekts funktionsfähig sein und ohne flüssiges Ankopplungsmedium auskommen.

Gelöst wird diese Aufgabe durch ein akustisches Rastermikroskop mit den kennzeichnenden Merkmalen des Anspruch 1. Vorteilhafte Ausgestaltungen sind Gegenstand der abhängigen Ansprüche 2 bis 15. Es wurde gefunden, daß die bekannten Nahfeldeffekte für Strahlungsquellen der verschiedensten physikalischen Wellen, so elektromagnetische, einschließlich Licht, auch bei akustischen Feldern in äquivalenter Weise auftreten. Unterschiede sind im wesentlichen darin zu sehen, daß unterschiedliche Multipole beteiligt sind. So kann ein akustischer Monopol Schallwellen emittieren, für elektromagnetische Wellen ist aber mindestens ein Dipol nötig.

Die aus der optischen Rastermikroskopie bekannten Vorteile hinsichtlich des Auflösungsvermögens sind deshalb auf ein akustisches Rastermikroskop übertragbar unter Berücksichtigung der unterschiedlichen Wellenlängen.

Resonante akustische Oszillatoren werden z.B. in der Uhrenindustrie in der Ausführung als miniaturisierte Schwingquarze produziert. Aus dieser Anwendung sind auch Verfahren zur Anregung und zur Messung des Schwingungszustands bekannt.

Gemäß der Erfindung werden die Nahfeldeffekte zwischen einem solchen resonanten akustischen Oszillator und einem Objekt zur Rastermikroskopie genutzt.

Gegenüber dem bekannten hochauflösenden akustischen Rastermikroskop (J.K. Zieniuk, A. Latuszek, bzw. US 4 646 573) hat die Erfindung den Vorteil, daß keine getrennte Empfangseinrichtung gebraucht wird, die eine kleine vom Objekt beeinflußte Strahlungsintensität erfassen muß und diese gegen die starken Einflüsse der hohen gesendeten Strahlungsintensität diskriminieren muß. Bei der Erfindung wird unmittelbar der Sender durch das Objekt beeinflußt, ein Empfang von gesendeten Schallwellen, die das Objekt berührt haben, erfolgt nicht. Die resonante Anregung des Oszillators erfolgt im Dauerbetrieb. Er wird im Bereich des akustischen Nahfelds über das zu untersuchende Objekt geführt.

Die Erfindung wird an Ausführungsbeispielen näher erläutert, die in der Zeichnung dargestellt sind. Es zeigen:
Fig. 1 das Schema eines akustischen Rastermikroskops mit einem Stimmgabel-Quarz als Oszillator, der parallel zum Objekt schwingt;
Fig. 2 entspricht Fig. 1, jedoch ist die Schwingungsrichtung senkrecht zum Objekt;
Fig. 3 eine Anordnung mit Stimmgabel-Oszillator, dessen eine Ecke als Sondenspitze wirkt und der schief zum Objekt schwingt, zuzüglich ist ein Ausführungsbeispiel der Elektrodenanordnung gezeigt;
Fig. 4 das Schema eines akustischen Rastermikroskops mit einem Stabschwinger, dessen eines Ende als Sondenspitze ausgebildet ist;
Fig. 5 ein experimentell gewonnenes Diagramm der Frequenzverschiebung eines Stimmgabel-Oszillators in Abhängigkeit vom Abstand zu einem Objekt im Nahfeldbereich, wobei die Gasdruckabhängigkeit des Effekts deutlich wird.

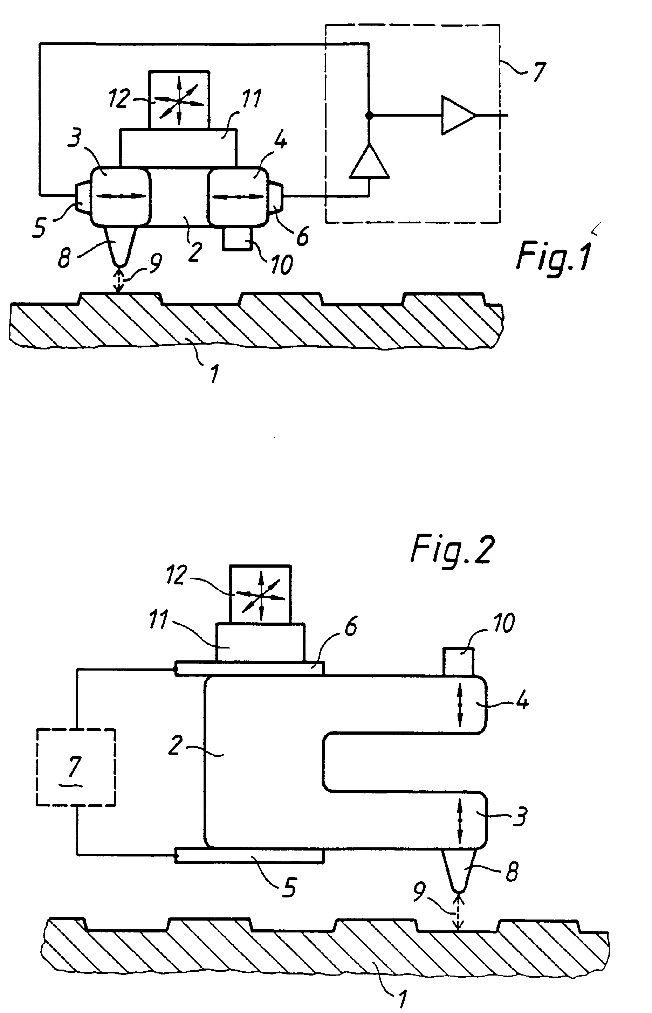

In Fig. 1 ist ein Schnitt durch ein Objekt 1 mit einer Struktur dargestellt. Parallel zur Oberfläche des Objekts 1 ist in einem geeigneten Abstand eine Stimmgabel 2 mit Enden 3 und 4 und zwei Elektroden 5 und 6 zur Anregung schematisch dargestellt. Die Enden 3 und 4 der Stimmgabel 2 schwingen parallel zur Oberfläche des Objekts 1 mit der Resonanzfrequenz der Stimmgabel 2.

Die Stimmgabel 2 besteht beispielsweise aus piezoelektrischem Quarz, die Anregung und die Messung erfolgt durch den piezoelektrischen Effekt über die beiden Elektroden 5 und 6. Dazu ist an diese ein elektronischer Schaltkreis 7 gelegt, der die Stimmgabel 2 durch elektronische Rückkopplung in Eigenresonanz anregt und der auch Dämpfungen der Stimmgabel 2 mißt.

Am einem Ende 3 der Stimmgabel 2 ist als Sonde eine feine Spitze 8 angebracht, die bis auf einen kleinen Abstand 9 an das Objekt 1 reicht. Am anderen Ende 4 kann eine Ausgleichsmasse 10 zur Stabilisierung des Resonanzverhaltens der Stimmgabel 2 vorgesehen werden.

Über einen Träger 11 ist die Stimmgabel 2 mit der Spitze 8 an einer dreidimensionalen Positioniereinrichtung 12 angebracht. Diese ermöglicht es, die Spitze 8 in den Meßabstand zum Objekt 1 zu bringen und durch rasterförmige Bewegung dieses abzutasten. Geeignete Ausführungen der Positioniereinrichtung 12 sind in der Raster-mikroskopie, speziell auch in der Raster-Tunnel-Mikroskopie bekannt. Dazu zählen in Grob- und Feinstelltrieb aufgegliederte Piezoantriebe mit einer Präzision, die der Auflösung des akustischen Rastermikroskops angepaßt ist.

Fig. 2 zeigt die Anordnung der gleichen Elemente für eine Ausführung mit der Schwingungsrichtung senkrecht zum Objekt 1. Dazu ist nur die Stimmgabel 2 in eine Ebene senkrecht zum Objekt 1 gedreht und die Anordnung der Spitze 8 am Ende 3 ebenfalls gedreht.

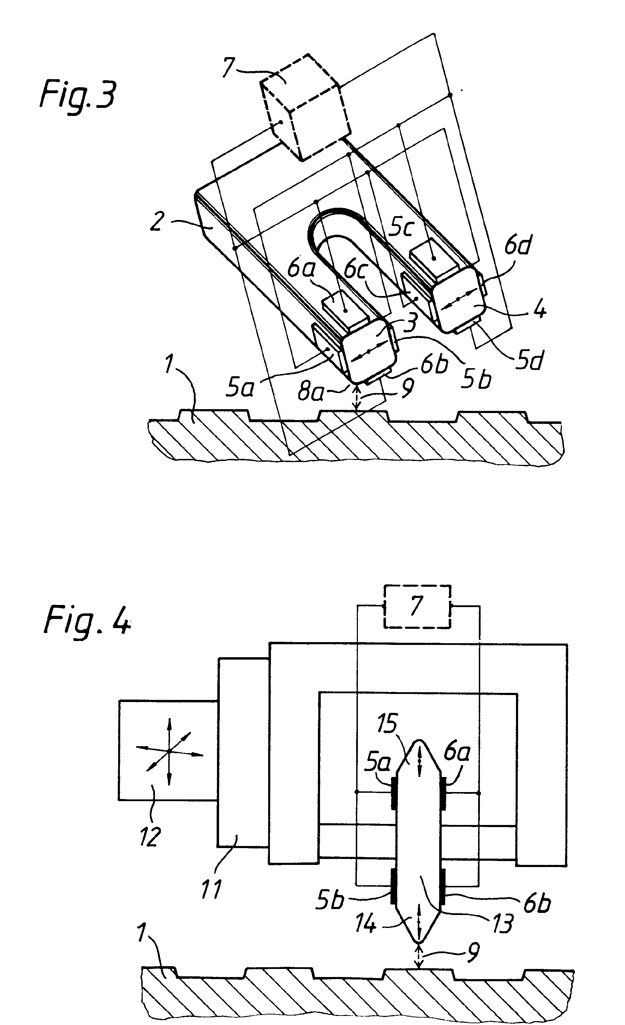

In Fig. 3 ist die Stimmgabel 2 und auch die Schwingungsrichtung schief gegen die Oberfläche des Objekts 1 geneigt. Es ist auch dargestellt, daß eine Ecke der Stimmgabel 2 an einem Ende 3 unmittelbar als Spitze 8a genutzt werden kann, also ohne zusätzliches Teil. Bei Bedarf kann die Formgebung der Stimmgabel 2 zur Ausbildung der integrierten Spitze 8a optimiert sein.

Für die Anordnungen nach Fig. 1 bis 3 sind z.B. Stimmgabeln geeignet, wie sie in Quarz-Kristallresonatoren DS-26 der Firma ETA S.A. CH-2540 Grenchen verwendet werden. Bei diesen Stimmgabeln sind die beiden Elektroden jeweils in mehrere Teilflächen 5a, 5b, 5c, 5d; 6a, 6b, 6c, 6d aufgeteilt, wie in Fig. 3 schematisch dargestellt, und auf beide Arme der Stimmgabeln verteilt, da so eine effektivere Kopplung zwischen elektrischer und mechanisch-akustischer Schwingung erreicht wird als bei der einfachen Prinzipanordnung nach Fig. 1. Die Resonanzfrequenz liegt bei 32kHz, die Schallwellenlänge in Luft also bei 1cm. Die typischen Abmessungen der Enden 3,4 sind etwa 0,1 mm. Die Schwingungsamplitude beträgt weniger als 1 µm an den Enden 3,4.

Die Resonatorgüte (Quality factor) ist größer als 50.000. Schaltkreise 7 zur Anregung und zur Messung von Frequenz oder Amplitude und somit der Dämpfung sind für solche Resonatoren bekannt und kommerziell erhältlich.

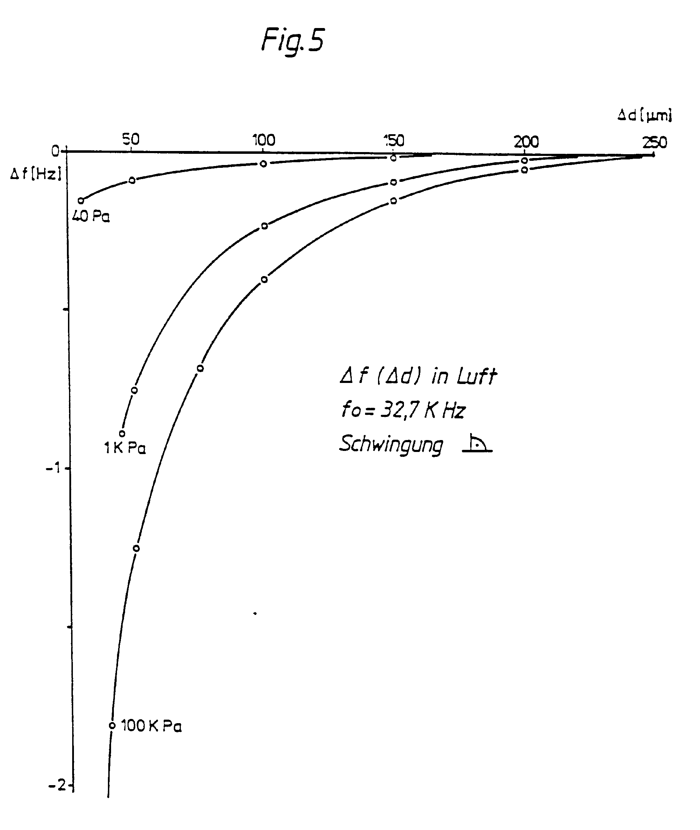

Bei einer Anordnung nach Fig. 3 ohne besondere Ausprägung der Spitze 8a und bei einem Abstand 9 in der Größenordnung von 0,1 mm verändert sich die Resonanzfrequenz der Stimmgabel 2 um typisch 2Hz pro 0,1mm Änderung des Abstandes 9 bei Normaldruck in Luft. Dies wird anhand von Fig. 5 näher erläutert. Die z-Abstandsauflösung erreicht dabei schon rund ein Zehntausendstel der Wellenlänge.

Wird in einer Anordnung nach Fig. 1 oder 2 die Spitze 8 mit einem Spitzenradius von ca. 50nm ausgeführt, wie das bei Spitzen für Raster-Tunnel-Mikroskope üblich ist, so wird über einen Abstandsbereich von ca. 100nm eine Abstandsauflösung von ca. 5nm erreicht. Entspricht der Abstand 9 etwa dem Spitzenradius, dann erreicht auch die laterale Auflösung etwa 50nm.

Neben der Frequenzverschiebung ist auch die Amplitudenänderung des resonanten Oszillators gut als Maß für die Dämpfung der Stimmgabel 2 durch das nahe Objekt 1 auszuwerten. Das Maß der Dämpfung wird der Position der Spitze 8, die aus den Daten der Positioniereinrichtung 12 bekannt ist, zugeordnet und durch die Abrasterung zu einem mikroskopischen Bild verarbeitet.

Ähnlich wie beim Raster-Tunnel-Mikroskop ist es vorteilhaft, bei der Abrasterung eines Objekts 1 den Abstand 9 der Spitze 8 zum Objekt 1 so zu regeln, daß die Schwingungsamplitude oder die Resonanzfrequenz während der Rasterung konstant bleibt. Das Regelsignal in Abhängigkeit von den Rasterpunkten zeichnet dann ein Profil der Oberfläche des Objekts 1. Außer der Höhe gehen dabei prinzipiell auch die lokalen elastischen Eigenschaften des Objekts 1 ein.

Wie andere Rastermikroskope bietet auch das akustische Nahfeld-Rastermikroskop die Möglichkeit, das Objekt 1 lokal an der Oberfläche zu beeinflussen. Insbesondere lassen sich lokal akustische Oberflächenwellen erzeugen.

Bei der Ausführung mit einer feinen Spitze 8 ist die Schwingungsamplitude an den Enden 3,4 der Stimmgabel 2 erheblich größer als der Arbeitsabstand 9 und die Auflösung.

Die Schwingungsamplitude der Spitze 8 kann reduziert werden, wenn sie vom Ende 3 zur Basis der Stimmgabel 2 hin verschoben wird. Dann wird aber auch die Beeinflussung der Stimmgabel 2 durch den Nahfeldeffekt reduziert.

Durch die elektronische Steuerung der Schwingungsanregung kann jedoch die Amplitude auch bis hinunter in den Bereich von 10nm reduziert werden. Eine kleinere Amplitude erreicht man auch durch Anregung der Stimmgabel 2 mit der Frequenz eines Obertons.

Je nach Präferenz kann die parallele Schwingungsrichtung nach Fig. 1 für hohe Abstandsauflösung oder die senkrechte Schwingungsrichtung nach Fig. 2 für hohe laterale Auflösung gewählt werden. In der Anordnung nach Fig. 2 ist dann bei einer Amplitude nahe 1 µm der mittlere Abstand 9 zwischen Spitze 8 und Objekt 1 groß gegen den Krümmungsradius der Spitze 8. Der Nahfeldeffekt wirkt daher im wesentlichen in den Intervallen, in denen die Schwingung der Stimmgabel 2 etwas mehr als 90% der maximalen Auslenkung in Richtung Objekt 1 erreicht. Der erforderliche minimale Abstand 9 der Spitze 8 zum Objekt 1 (z.B. 50nm) im Umkehrpunkt ist aber immer noch groß gegen die erreichte Abstandsauflösung (z.B. 5nm).

Das Beschädigungsrisiko für Spitze 8 und Objekt 1 ist daher gering, im Unterschied etwa zum Kraftmikroksop nach EP-A-0 223 918, bei dem der Arbeitsabstand der Spitze und die Abstandsauflösung beide typisch bei 0,1nm liegen.

Fig. 4 zeigt in schematischer Darstellung, daß der erfindungsgemäß eingesetzte resonante akustische Oszillator nicht nur eine Stimmgabel 2 sein kann.

An deren Stelle tritt ein piezoelektrischer Quarzstab 13, der mittig eingespannt ist. Die Enden 14 und 15 schwingen im Gegentakt in der Längsrichtung des Stabs 13. Zur Anregung dienen Elektroden 5a, 5b und 6a, 6b. Das dem Objekt 1 im Abstand 9 gegenüberliegende Ende 14 kann als Spitze ausgebildet sein. Die weitere Anordnung entspricht Fig. 1 bis Fig 3. Ein geeigneter Schwingquarzstab 13 ist z.B. in dem Quarzkristallresonator CX-MV der Firma ETA S.A. CH-2540 Grenchen enthalten. Typische Resonanzfrequenz dafür ist 1MHz, die Schallwellenlänge in Luft also ca. 0,33 mm. Ein solcher Quarz-Resonator ist auch in R.J. Dinger, Proc. 35th Ann.Freq.Control Symposium, USAERADCOM, Ft. Monmouth, NJ, May 1981, Seite 144 ff beschrieben.

Die Funktionsweise ist ansonsten die gleiche wie bei den Beispielen der Fig. 1 bis 3.

Die genannten auch in Fig. 1 - 4 skizzierten Quarzoszillatoren haben die besondere Eigenschaft, daß sie aus einem Paar zu gegenphasiger Schwingung angeregter Balken oder Stabschwinger bestehen. Sie sind im akustischen Nahfeld-Rastermikroskop so angeordnet, daß nur einer der Balken bzw. Stabschwinger in Wechselwirkung mit dem Objekt 1 gerät. Dies hat zur Folge, daß bei großem Abstand vom Objekt 1, solange keine merkliche Wechselwirkung auftritt, keine Schwingungen vom Oszillator auf den Träger 11 (Fig. 1) übertragen werden, da die Befestigung an den Träger 11 an einem Schwingungsknoten erfolgt. Wird jedoch durch die Wechselwirkung mit dem Objekt 1 das Oszillatorpaar einseitig belastet, tritt eine Schwingungsübertragung auf den Träger 11 auf, die im Träger 11 gedämpft wird. Das führt zu einer Steigerung der Meßempfindlichkeit, denn die Änderung der Dämpfung ist unter diesen Bedingungen wesentlich größer als diejenige, die nur durch die Wechselwirkung des Stabs bzw. Balkenschwingers mit dem Obejkt 1 auftritt.

Fig. 5 zeigt ein Diagramm der Frequenzverschiebung der Resonanzfrequenz des resonanten akustischen Resonators in Abhängigkeit vom Abstand 9 (Δd) zwischen der Stimmgabel 2 und dem Objekt 1 in Luft.

Die Meßwerte wurden mit einer Anordnung gewonnen, bei der eine Stimmgabel 2 nach Fig. 3 ohne spezielle Spitze 8 entsprechend Fig. 2 senkrecht zu einer gekrümmten Metalloberfläche als Objekt 1 schwingt. Der angegebene relative Abstand Δd ist nicht auf die Berührung bei Δd = 0µm geeicht.

Die Druckabhängigkeit der Kennlinien zeigt die akustische Natur des Effekts, die ohne ein Kopplungsmedium nicht wirksam werden kann. Schon bei einem Vakuum von 1,5Pa ändert sich die Frequenz über den im Diagramm für Drucke von 40Pa, 1kPa und 100 kPa (Normaldruck) gezeigten Abstandsbereich nur noch um maximal 0,02 Hz. Bei Normaldruck übersteigt die Frequenzänderung das Hundertfache dieses Werts. Außer Luft sind als Kopplungsmedium auch andere Gase, z.B. Helium, geeignet. Entsprechend den akustischen Eigenschaften ändern sich dann auch die Frequenz/Abstand-Kennlinien.

## Patentansprüche

1. Akustisches Rastermikroskop zur Untersuchung eines Objektes (1), **dadurch gekennzeichnet,**
- daß ein stetig resonant angeregter, das Objekt nicht berührender akustischer Oszillator im Bereich seines akustischen Nahfeldes über diesem Objekt angeordnet ist,
- daß als Sonde nur ein lokal eng begrenzter, in Richtung des Objekts hervorstehender Bereich des akustischen Oszillators dem Objekt genähert wird,
- daß die aufgrund der Wechselwirkung seines akustischen Nahfeldes mit dem Objekt erfahrene Dämpfung des akustischen Oszillators bestimmt wird, die ein Maß für den Abstand zwischen Objekt und Oszillator ist,
- und daß durch Rastern dieser Sonde die Struktur dieses Objektes abgebildet wird.

2. Akustisches Rastermikroskop nach Anspruch 1 , **dadurch gekennzeichnet**, daß der akustische Oszillator aus einem gekoppelten Paar akustischer Oszillatoren besteht.

3. Akustisches Rastermikroskop nach Anspruch 2 , **dadurch gekennzeichnet**, daß der akustische Oszillator eine Stimmgabel (2) ist.

4. Akustisches Rastermikroskop nach Anspruch 2 , **dadurch gekennzeichnet**, daß der resonante akustische Oszillator ein mittig fixierter Balken (13) mit freien Enden (14,15) ist.

5. Akustisches Rastermikroskop nach Anspruch 1 , **dadurch gekennzeichnet**, daß der akustische Oszillator parallel zur Oberfläche des Objekts (1) schwingt.

6. Akustisches Rastermikroskop nach Anspruch 1 , **dadurch gekennzeichnet**, daß der akustische Oszillator senkrecht zur Oberfläche des Objekts (1) schwingt.

7. Akustisches Rastermikroskop nach Anspruch 1 , **dadurch gekennzeichnet**, daß an einem Teil des akustischen Oszillators, an dem dieser mit großer Schwingungsamplitude den geringsten Abstand zum Objekt einnimmt, eine Sondenspitze ausgeformt oder angeordnet ist.

8. Akustisches Rastermikroskop nach Anspruch 1 , **dadurch gekennzeichnet** , daß zwischen dem akustischen Oszillator und dem Objekt (1) ein Gas als Koppelmedium eingebracht ist.

9. Akustisches Rastermikroskop nach Anspruch 1 , **dadurch gekennzeichnet**, daß die Frequenzänderung des in Eigenresonanz schwingenden akustischen Oszillators als Maß für dessen Dämpfung gemessen wird.

10. Akustisches Rastermikroskop nach Anspruch 1 , **dadurch gekennzeichnet**, daß die Amplitudenänderung des in Eigenresonanz schwingenden akustischen Oszillators als Maß für dessen Dämpfung gemessen wird.

11. Akustisches Rastermikroskop nach Anspruch 1 , **dadurch gekennzeichnet,** daß beim Abrastern des Objekts (1) der Abstand (9) zwischen dem akustischen Oszillator und dem Objekt (1) so geregelt wird, daß die Dämpfung des akustischen Oszillators auf ein konstantes Maß kompensiert wird.

12. Akustisches Rastermikroskop nach Anspruch 1, **dadurch gekennzeichnet,** daß der akustische Oszillator eine Resonatorgüte größer als Tausend hat.

13. Akustisches Rastermikroskop nach Anspruch 1, **dadurch gekennzeichnet**, daß der akustische Oszillator aus piezoelektrischem Material besteht.

14. Akustisches Rastermikroskop nach Anspruch 13, **dadurch gekennzeichnet**, daß der akustische Oszillator (2,13) mit zwei strukturierten Elektroden (5,6) versehen und mit einem elektronischen Schaltkreis (7) verbunden ist, der die Erregung des akustischen Oszillators (2,13) in Eigenresonanz mittels elektronischer Rückkopplung bewirkt.

15. Akustisches Rastermikroskop nach Anspruch 1, **dadurch gekennzeichnet**, daß der akustische Oszillator aus einem gekoppelten Paar gegenphasig schwingender Oszillatoren besteht, das an einem Knotenpunkt der gekoppelten Schwingung gehaltert ist, so daß keine Schwingungen auf die Halterung übertragen werden, solange keine Wechselwirkung mit einem Objekt (1) besteht.

## Claims

1. An acoustic scanning microscope for examining an object (1), **characterized in** that
- an acoustic oscillator energized in constant resonance, which does not touch the object, is arranged above the said object in the region of its acoustic near field;
- only one region of the acoustic oscillator, which is narrowly limited locally and projects in the direction of the object, is brought near to the object as a probe;
- that damping of the acoustic oscillator is determined which is experienced because of the interaction of its acoustic near field with the object and is a measure of the distance between the object and the oscillator;
- the structure of the said object is pictured through scanning by the said probe.

2. An acoustic scanning microscope as in Claim 1,
**characterized in** that the acoustic oscillator consists of a coupled pair of acoustic oscillators.

3. An acoustic scanning microscope as in Claim 2,
**characterized in** that the acoustic oscillator is a tuning-fork (2).

4. An acoustic scanning microscope as in Claim 2,
**characterized in** that the resonant acoustic oscillator is a beam (13) fixed at the centre with free ends (14, 15).

5. An acoustic scanning microscope as in Claim 1,
**characterized in** that the acoustic oscillator oscillates in parallel with the surface of the onbject (1).

6. An acoustic scanning microscope as in Claim 1,
**characterized in** that the acoustic oscillator oscillates perpendicularly to the surface of the onbject (1).

7. An acoustic scanning microscope as in Claim 1,
**characterized in** that a probe tip is moulded or arranged on one part of the acoustic oscillator at which it adopts the shortest distance from the object with a high amplitude of oscillation.

8. An acoustic scanning microscope as in Claim 1,
**characterized in** that a gas is introduced as a coupling medium betwee the acoustic oscillator and the object (1).

9. An acoustic scanning microscope as in Claim 1,
**characterized in** that the alteration in frequency of the acoustic oscillator oscillating in natural resonance is measured as a measure of its damping.

10. An acoustic scanning microscope as in Claim 1,
**characterized in** that the alteration in amplitude of the acoustic oscillator oscillating in natural resonance is measured as a measure of its damping.

11. An acoustic scanning microscope as in Claim 1,
**characterized in** that during scanning of the object (1) the distance (9) between the acoustic oscillator and the object (1) is so regulated that the damping of the acoustic oscillator is compensated to a constant quantity.

12. An acoustic scanning microscope as in Claim 1,
**characterized in** that the acoustic oscillator has a resonator quality higher than a thousand.

13. An acoustic scanning microscope as in Claim 1,
**characterized in** that the acoustic oscillator consists of piezoelectric material.

14. An acoustic scanning microscope as in Claim 13,
**characterized in** that the acoustic oscillator (2, 13) is provided with two structured electrodes (5, 6) and connected to an electronic circuit (7) which causes the excitation of the acoustic oscillator (2, 13) in natural resonance by means of electronic feedback.

15. An acoustic scanning microscope as in Claim 1,
**characterized in** that the acoustic oscillator consists of a coupled pair of oscillators oscillating in opposite phase, which is mounted at a nodal point of the coupled oscillation so that no oscillations are transferred to the mounting as long as no interaction exist with an object (1).

## Revendications

1. Microscope à balayage acoustique pour l'examen d'un objet (1), caractérisé en ce
- qu'un oscillateur acoustique excité en résonance en permanence, ne faisant pas contact avec l'objet, est disposé dans la région de son champ acoustique proche au-dessus de cet objet,
- que seulement une région de l'oscillateur acoustique faisant saillie en direction de l'objet, localement étroitement limitée, est rapprochée de l'objet, en tant que sonde,
- qu'on détermine l'amortissement de l'oscillateur acoustique subi du fait de l'interaction de son champ acoustique proche avec l'objet et qui constitue une mesure de la distance entre l'objet et l'oscillateur,
- et que la structure de cet objet est représentée par balayage de cette sonde.

2. Microscope à balayage acoustique selon la revendication 1, caractérisé en ce que l'oscillateur acoustique est constitué par une paire d'oscillateurs acoustiques couplés.

3. Microscope à balayage acoustique selon la revendication 2, caractérisé en ce que l'oscillateur acoustique est un diapason (2).

4. Microscope à balayage acoustique selon la revendication 2, caractérisé en ce que l'oscillateur acoustique résonant est une poutre (13) à extrémités (14, 15) libres fixée centralement.

5. Microscope à balayage acoustique selon la revendication 1, caractérisé en ce que l'oscillateur acoustique oscille parallèlement à la surface de l'objet (1).

6. Microscope à balayage acoustique selon la revendication 1, caractérisé en ce que l'oscillateur acoustique oscille perpendiculairement à la surface de l'objet (1).

7. Microscope à balayage acoustique selon la revendication 1, caractérisé en ce qu'une pointe de sonde est formée ou disposée sur une partie de l'oscillateur acoustique à laquelle celui-ci occupe la plus petite distance par rapport à l'objet avec une grande amplitude d'oscillation.

8. Microscope à balayage acoustique selon la revendication 1, caractérisé en ce qu'un gaz est chargé entre l'oscillateur acoustique et l'objet (1) en tant qu'agent de couplage.

9. Microscope à balayage acoustique selon la revendication 1, caractérisé en ce qu'on mesure la modification de fréquence de l'oscillateur acoustique résonant en résonance propre en tant que mesure de son amortissement.

10. Microscope à balayage acoustique selon la revendication 1, caractérisé en ce qu'on mesure la modification d'amplitude de l'oscillateur acoustique résonant en résonance propre en tant que mesure de son amortissement.

11. Microscope à balayage acoustique selon la revendication 1, caractérisé en ce que, lors du balayage de l'objet (1), la distance (9) entre l'oscillateur acoustique et l'objet (1) est réglée de telle manière que l'amortissement de l'oscillateur acoustique est compensé d'une valeur constante.

12. Microscope à balayage acoustique selon la revendication 1, caractérisé en ce que l'oscillateur acoustique a un facteur de qualité de résonateur supérieur à mille.

13. Microscope à balayage acoustique selon la revendication 1, caractérisé en ce que l'oscillateur acoustique est constitué de matériau piézoélectrique.

14. Microscope à balayage acoustique selon la revendication 13,
caractérisé en ce que l'oscillateur acoustique (2, 13) est muni de deux électrodes structurées (5, 6) et d'un circuit de commutation électronique (7) qui produit l'excitation de l'oscillateur acoustique (2, 13) en résonance propre au moyen d'une rétroaction électronique.

15. Microscope à balayage acoustique selon la revendication 1, caractérisé en ce que l'oscillateur acoustique est composé d'une paire d'oscillateurs couplés oscillant en opposition de phase qui est fixée à un noeud de l'oscillation couplée de sorte qu'aucune ondulation n'est transmise au raccord tant qu'il n'existe pas d'interaction avec un objet (1).
